# EUROPÄISCHE PATENTSCHRIFT

(11) **EP 3 424 092 B1**
(45) Veröffentlichungstag und Bekanntmachung des Hinweises auf die Patenterteilung: **29.04.2020**
(21) Anmeldenummer: 16826074.3
(22) Anmeldetag: 28.12.2016
(51) Int. Cl.: H01M 2/02, H01M 2/10

(54) **BATTERIEPACK UND VERFAHREN ZUR HERSTELLUNG EINES BATTERIEPACKS**
BATTERY PACK AND METHOD FOR PRODUCING A BATTERY PACK
BLOC-BATTERIE ET PROCÉDÉ DE FABRICATION D'UN BLOC-BATTERIE

(30) Priorität: 01.03.2016 DE 102016103667
(43) Veröffentlichungstag der Anmeldung: 09.01.2019
(73) Patentinhaber: Unicorn Energy GmbH, 73525 Schwäbisch Gmünd (DE)
(72) Erfinder: NIERESCHER, Ruediger, 73529 Schwaebisch Gmuend (DE); PREISS, Michael, 73527 Schwaebisch Gmuend (DE)
(74) Vertreter: DREISS Patentanwälte PartG mbB
(86) Internationale Anmeldenummer: PCT/EP2016/082792
(87) Internationale Veröffentlichungsnummer: WO 2017/148560

(56) Entgegenhaltungen:
- CN-U- 203 967 151
- DE-A1-102006 061 270
- DE-A1-102009 054 899
- DE-A1-102010 045 707
- DE-A1-102011 119 253
- DE-A1-102013 021 134
- DE-A1-102014 212 143

## Beschreibung

Die vorliegende Erfindung betrifft ein Batteriepack mit mindestens einer Batteriezelle, wobei die Batteriezelle an ihren Batteriepolen mit Verbindungselementen gekoppelt und elektrisch leitend verbunden ist. Zudem betrifft die vorliegende Erfindung auch ein Verfahren zum Herstellen eines Batteriepacks mit mindestens einer Batteriezelle, wobei die Batteriezelle an ihren Batteriepolen mit Verbindungselementen gekoppelt und elektrisch leitend verbunden wird.

Batteriepacks und Verfahren zum Herstellen von solchen Batteriepacks sind aus dem Stand der Technik bekannt. Batteriepacks sind in unterschiedlichen Bauformen und Baugrößen und mit unterschiedlichen Zellenzahlen erhältlich und dienen zur netzunabhängigen Energieversorgung von an Batteriepacks angeschlossenen Energieverbrauchern. Ein Batteriepack ist beispielsweise aus der DE 10 2012 007 958 U1 bekannt. DE102014212143 A1 offenbart eine Kontaktierungsvorrichtung zur Kontaktieren einer Energiespeicherzelle.

Bei Batteriepacks ist problematisch, dass deren Herstellung auf Grund der Vielzahl von zu montierenden Komponenten und der Komplexität der Montageschritte überwiegend in Handarbeit erfolgt. Dies führt zu hohen Kosten bei der Herstellung von Batteriepacks. Zudem kann eine gleichbleibende Qualität auf Grund der in Handarbeit erfolgenden Montage nur durch strikte Qualitätskontrolle eingehalten werden. Auch dies ist mit hohen Kosten verbunden.

Der vorliegenden Erfindung liegt daher die Aufgabe zugrunde, mit einfachen konstruktiven Mitteln eine einfache und zuverlässige Herstellung von Batteriepacks zu ermöglichen.

Die voranstehende Aufgabe löst die Erfindung durch ein Batteriepack mit den Merkmalen des Anspruchs 1. Danach zeichnet sich das Batteriepack dadurch aus, dass die Batteriezelle auf einem flächigen Leiterelement positioniert ist und dass die Batteriezelle durch einen Trennvorgang und/oder einen Umformvorgang zwischen Verbindungselementen und Leiterelement elektrisch leitend mit dem Leiterelement verbunden und am oder auf dem Leiterelement fixiert ist.

Durch das Batteriepack gemäß der Erfindung ist eine konstruktiv einfache und zugleich stabile Möglichkeit der Verbindung zwischen einer Batteriezelle und einem flächigen Leiterelement geschaffen. Hierzu dient ein Verbindungselement, welches mit dem flächigen Leiterelement zusammenwirkt. Das Verbindungselement wird auf dem Leiterelement positioniert oder aufgesetzt und an das Leiterelement gedrückt. Dabei findet zwischen dem Verbindungselement und dem Leiterelement ein Trennvorgang und/oder ein Umformvorgang statt. Hierdurch wird das Verbindungselement mit dem Leiterelement mechanisch verbunden. Eine elektrisch leitende Verbindung zwischen Leiterelement und Verbindungselement ist hergestellt. In vorteilhafter Weise ist somit eine Ankopplung einer Batteriezelle auf einem flächigen Leiterelement ohne eine stoffschlüssige Verbindung wie z.B. Löten ermöglicht. Eine maschinelle Fertigung wird begünstigt. Eine elektrische Kontaktierung der Batteriezelle oder eine Kontaktierung mehrerer Batteriezellen untereinander kann durch das flächige Leiterelement erfolgen.

Der Begriff "Batteriezelle" ist im weitesten Sinne zu verstehen. So kann es sich es sich bei einer Batteriezelle um einen zellenartigen Energiespeicher in Form eines elektrochemischen oder eines anderen elektrischen Speichers handeln.

In Bezug auf die Kopplung zwischen Verbindungselement und Batteriezelle ist denkbar, dass das Verbindungselement mittelbar oder unmittelbar mit der Batteriezelle verbunden oder gekoppelt ist.

Die Verbindungselemente weisen Kontaktabschnitte auf, mit denen die Verbindungselemente in das Leiterelement einpressbar, einstanzbar, eincrimpbar oder einklemmbar sind. Nach Durchführen eines solchen Vorgangs sind die Verbindungselemente mit ihren Kontaktabschnitten in das flächige Leiterelement eingepresst, eingestanzt, eingecrimpt oder eingeklemmt. Auf diese Weise lassen sich in einem Schritt eine mechanische Befestigung und eine elektrische oder elektronische Kontaktierung herstellen. Die Kontaktabschnitte können beispielsweise als Stifte, Schneiden, Klingen oder Stecker ausgebildet sein. Auch eine Ausführung mit einer Schneidklemme als Kontaktabschnitt, die als Widerhaken wirkt, ist denkbar.

Im Leiterelement können Vertiefungen oder Durchgänge zur Aufnahme der Kontaktabschnitte ausgebildet sein. Durch einen solchen Verbindungsvorgang, der im Wesentlichen von einer translatorischen Bewegung (geradlinige Bewegung) ausgeht, ist eine maschinelle automatisierte Fertigung von Batteriepacks begünstigt.

In vorteilhafter Weise können die Verbindungselemente jeweils mittels eines Kontaktblechs mit der Batteriezelle verbunden sein, insbesondere verschweißt sein. Hierdurch ist eine einfache und stabile Verbindung geschaffen. Im Konkreten kann das Kontaktblech mit der Batteriezelle und mit dem Verbindungselement verschweißt sein.

Um die Anzahl an Montageschritten zu reduzieren, können das Verbindungselement (ggf. nebst Kontaktelementen) und das Kontaktblech einstückig ausgebildet sein. Hierdurch muss nur ein Element gehandhabt werden, das einen stabilen Aufbau aufweist. Eine Befestigung an einem Batteriepol der Batteriezelle kann durch Löten erfolgen.

Um eine möglichst weitgehende Vormontage zu ermöglichen, können das Verbindungselement (ggf. nebst Kontaktelementen) sowie das Kontaktblech einstückig mit einem Batteriepol einer Batteriezelle ausgebildet sein. Hierdurch werden die Stabilität erhöht und die Montage abermals vereinfacht. Verbindungselement und Kontaktblech werden dann bereits bei der Herstellung der Batteriezelle einstückig mit einem Batteriepol der Batteriezelle ausgebildet.

Die Batteriezelle kann durch einen Zellhalter fixiert sein. Somit können eine oder mehrere Batteriezellen stoßfest und geschützt in einem Zellhalter angeordnet sein. Die Batteriezelle kann in den Zellhalter eingelegt oder eingeklebt sein.

Die Gesamtheit aus Zellhalter, Batteriezelle, Verbindungselement und Kontaktblech stellt ein Zellpack dar und kann als solcher gehandhabt werden.

Das Kontaktblech und das Verbindungselement bilden gemeinsam ein Zellkontaktierungselement.

Zweckmäßigerweise kann der Zellhalter ein Unterteil und ein Oberteil aufweisen, die mittels einer Klemmverbindung aneinander befestigbar sind. Nach Herstellen dieser Verbindung, beispielsweise durch Zusammendrücken von Oberteil und Unterteil, sind Oberteil und Unterteil aneinander befestigt. Auf separate Fügemittel kann verzichtet werden. Indem die Klemmverbindung durch translatorisches Zusammenführen von Oberteil und Unterteil hergestellt werden kann, ist eine maschinelle Herstellung abermals begünstigt. Bei der Klemmverbindung kann es sich beispielsweise um eine Rasthakenverbindung handeln. Hiermit lässt sich eine stabile Verbindung von Oberteil und Unterteil herstellen.

In vorteilhafter Weise kann eines der Teile von Oberteil und Unterteil Führungsstifte aufweisen und das andere Teil von Oberteil und Unterteil kann Ausnehmungen oder Durchgänge zur Aufnahme der Führungsstifte aufweisen. Auf diese Weise wird der Vorgang vereinfacht, da zwischen Oberteil und Unterteil eine Führung stattfindet, und zwar unabhängig von einer etwaigen Klemmverbindung oder Rasthakenverbindung. Auch hiermit ist eine maschinelle Fertigung eines Batteriepacks weiter begünstigt.

Zweckmäßigerweise kann der Zellhalter einen Aufnahmebereich aufweisen, in dem ein Kontaktblech gehalten ist. Der Aufnahmebereich kann als Aufnahmeschlitz für ein Kontaktblech ausgebildet sein. Denkbar ist, dass dieser Aufnahmebereich am Unterteil des Zellhalters angeordnet ist.

Der Zellhalter kann Aufnahmeabschnitte aufweisen, in oder an denen jeweils eines der Verbindungselemente aufgenommen und/oder fixiert ist. Auf diese Weise können Kontaktblech und Verbindungselemente unabhängig voneinander in den Zellhalter eingesetzt werden, werden von diesem in Position gehalten und können im Zellhalter verbunden werden, beispielsweise miteinander verschweißt werden. Die Aufnahmeabschnitte können als Fortsätze des Zellhalters, insbesondere des Unterteils des Zellhalters, ausgebildet sein und Durchgänge aufweisen, in die die Verbindungselemente einsetzbar sind.

Zweckmäßigerweise können am Zellhalter, insbesondere am Unterteil des Zellhalters, abragende Positionierstifte ausgebildet sein und am Leiterelement können Ausnehmungen ausgebildet sein, die mit den Positionierstiften korrespondieren. Hiermit wird die Zuordnung von Batteriezelle und/oder Zellhalter zum Leiterelement sichergestellt. Ein automatisiertes und positionsgenaues Aufsetzen des Zellhalters auf das Leiterelement wird hierdurch begünstigt.

In vorteilhafter Weise kann der Zellhalter Ausgleichselemente zum Toleranzausgleich der Dicke der Batteriezellen aufweisen. Somit ist eine Aufnahme und Fixierung einer oder mehrerer Batteriezellen im Zellhalter auch dann gewährleistet, wenn die Batteriezellen sich in ihrer Dicke unterscheiden. Dabei ist denkbar, dass die Ausgleichselemente in Form von silikongefüllten Taschen ausgebildet sind. Ein Längenausgleich der Batteriezellen kann durch eine flexible Ausgestaltung der Kontaktbleche erfolgen.

Bei dem flächigen Leiterelement kann es sich beispielsweise um ein Trägerelement für elektronische Bauteile, um eine Platine oder eine Leiterplatte handeln. Insbesondere kann das flächige Leiterelement als mit elektronischen Bauteilen bestückte Leiterplatine ausgebildet sein. Das flächige Leiterelement kann eben oder gekrümmt ausgebildet sein, beispielsweise als Segment eines Zylindermantels.

Zweckmäßigerweise können auf zwei gegenüberliegenden Seiten des flächigen Leiterelements jeweils mindestens eine Batteriezelle positioniert sein, insbesondere in Form von durch Zellhalter gehaltenen Zellpacks. Neben kompakten Abmessungen des Batteriepacks ist auch eine thermisch günstige Anordnung erreicht.

In vorteilhafter Weise können auf mindestens einer Seite des flächigen Leiterelements Batteriezellen in mehreren Lagen, insbesondere mindestens zwei Lagen, aufeinander angeordnet sein. Hiermit lassen sich mit lediglich einer Platine auch eine höhere Zellenzahl und damit höhere Kapazitäten realisieren. Dabei können Batteriezellen untereinander durch Kontaktbleche an Batteriepolen miteinander verbunden und sein.

Die Batteriezellen können - im Querschnitt gesehen - zentrisch aufeinander angeordnet sein (flächenzentriert), d.h. eine Batteriezelle kann zentrisch ausgerichtet auf einer zweiten Batteriezelle aufliegen. Die Freiräume zwischen den Batteriezellen können zur Kühlung genutzt werden. Ebenso kann eine Batteriezelle einer zweiten Lage im Zwischenraum auf zwei Batteriezellen einer ersten Lage angeordnet sein (raumzentriert). Hiermit lässt sich eine vergleichsweise dichte und platzsparende Anordnung von Batteriezellen erreichen.

Mehrere in einer Lage angeordnete Batteriezellen müssen nicht zwangsläufig in einer Ebene angeordnet sein. So kann eine Lage auch durch mehrere, leicht versetzt zueinander angeordnete Batteriezellen gebildet sein. Die Lage kann dann eine gekrümmte Form aufweisen.

Unabhängig von der Anordnung der Batteriezellen können diese in Reihe geschaltet sein, um eine gewünschte Spannung zu erreichen. Die Batteriezellen können untereinander durch Kontaktbleche an deren Batteriepolen leitend verbunden sein. Eine Kontaktierung von Batteriezellen am flächigen Leiterelement kann dann an den jeweiligen Enden der in Reihenschaltung erfolgen.

Zweckmäßigerweise kann ein das Batteriepack aufnehmende Gehäuse vorgesehen sein, das einen runden oder n-eckigen Querschnitt mit n > 3 aufweist. Hierdurch ist ein geeignetes Außengehäuse für das Batteriepack geschaffen. Ein Gehäuse mit n-eckigem Querschnitt kann als dreieckiges, viereckiges oder quadratisches oder als sechseckiges Gehäuse ausgebildet sein. Das sechseckige Gehäuse ist wabenförmig und weist daher eine gute Stapelbarkeit auf.

Die eingangs genannte Aufgabe wird auch durch ein Verfahren mit den Merkmalen des nebengeordneten Patentanspruchs gelöst. Danach zeichnet sich das Verfahren dadurch aus, dass die Batteriezelle auf einem flächigen Leiterelement positioniert wird und die mit der Batteriezelle gekoppelten Verbindungselemente derart mit dem Leiterelement zusammenwirken, dass die Batteriezelle durch einen Trennvorgang und/oder einen Umformvorgang zwischen Verbindungselementen und Leiterelement elektrisch leitend mit dem Leiterelement verbunden und am oder auf dem Leiterelement fixiert wird.

Hinsichtlich der erzielbaren Vorteile und der erfinderischen Tätigkeit wird auf das zum Anspruch 1 Gesagte verwiesen.

Zweckmäßigerweise können die Verbindungselemente jeweils Kontaktabschnitte aufweisen, mit denen die Verbindungselemente beim Positionieren oder Aufsetzen der Batteriezelle auf das Leiterelement in das Leiterelement eingepresst, eingestanzt, eingecrimpt und/oder eingeklemmt werden. Die Kontaktabschnitte können als Stifte, Schneiden, Klingen oder Stecker ausgebildet sein. Auch Schneidklemmen in der Art eines Widerhakens sind denkbar. Im Leiterelement können Durchgänge oder Vertiefungen zur Aufnahme der Kontaktabschnitte ausgebildet sein, die Verbindungselementaufnahmen darstellen. Hiermit lassen sich in einem Schritt eine mechanische Befestigung und eine elektrische oder elektronische Kontaktierung herstellen. Eine automatische Fertigung ist begünstigt.

In vorteilhafter Weise können die Verbindungselemente mittels eines Kontaktblechs mit der Batteriezelle gekoppelt werden, insbesondere verschweißt werden. Eine einfache und stabile Verbindung ist geschaffen. Im Konkreten kann das Kontaktblech mit der Batteriezelle und mit dem Verbindungselement verschweißt werden.

Alternativ hierzu ist denkbar, dass das Verbindungselement (ggf. nebst Kontaktabschnitten) einstückig mit dem Kontaktblech ausgebildet ist. Dies erspart einen Montageschritt und erhöht die Stabilität. Zudem können das Verbindungselement (ggf. nebst Kontaktabschnitten) und das Kontaktblech einstückig mit einem Batteriepol einer Batteriezelle ausgebildet sein. Dies kann bereits bei der Herstellung der Batteriezelle erfolgen. Der Grad der Vormontage ist somit erhöht, wodurch die eigentliche Montage des Batteriepacks weiter vereinfacht ist.

Die Batteriezelle kann durch einen Zellhalter fixiert werden. Somit können eine oder mehrere Batteriezellen stoßfest und geschützt in einem Zellhalter angeordnet werden. Die Batteriezelle kann in den Zellhalter eingelegt oder eingeklebt werden.

Zweckmäßigerweise kann der Zellhalter einen Aufnahmebereich aufweisen, in dem das Kontaktblech eingesetzt wird. Der Aufnahmebereich kann als Aufnahmeschlitz für ein Kontaktblech ausgebildet sein. Denkbar ist, dass dieser Aufnahmebereich am Unterteil des Zellhalters angeordnet ist.

Der Zellhalter kann Aufnahmeabschnitte aufweisen, in oder an denen jeweils eines der Verbindungselemente eingesetzt wird. Dabei ist es von Vorteil, wenn dieses Einsetzen vor einem Positionieren der Batteriezelle und/oder des Zellhalters am Leiterelement erfolgt. Auf diese Weise können Kontaktblech und Verbindungselemente unabhängig voneinander in den Zellhalter eingesetzt und beispielsweise miteinander verschweißt werden. Die Aufnahmeabschnitte können als Fortsätze des Zellhalters, insbesondere des Unterteils des Zellhalters, ausgebildet sein und Durchgänge aufweisen, in die die Verbindungselemente eingesetzt werden.

In vorteilhafter Weise können am Zellhalter, insbesondere am Unterteil des Zellhalters, abragende Positionierstifte ausgebildet sein, die zur Positionierung der Batteriezelle und/oder des Zellhalters auf dem Leiterelement in im Leiterelement ausgebildete Ausnehmungen geführt werden. Hiermit wird die Zuordnung von Batteriezelle und/oder Zellhalter zum Leiterelement sichergestellt. Eine automatisierte Montage wird begünstigt.

Zweckmäßigerweise können Batteriezellen auf zwei gegenüberliegenden Seiten des flächigen Leiterelements positioniert werden, insbesondere in Form von durch Zellhalter gehaltenen Zellpacks. Neben kompakten Abmessungen des Batteriepacks wird hiermit auch eine thermisch günstige Anordnung erreicht.

Zur weiteren Ausgestaltung des Verfahrens zum Herstellen eines Batteriepacks können auch die im Zusammenhang mit dem Batteriepack beschriebenen Maßnahmen dienen, die sich auch in verfahrensmäßiger Hinsicht lesen lassen.

Die Erfindung wird im Folgenden anhand der Figuren näher erläutert, wobei gleiche oder funktional gleiche Elemente zum Teil nur einmal mit Bezugszeichen versehen sind. Es zeigen:
- Fig.1: in schematischen Ansichten ein Ausführungsbeispiel eines Batteriepacks in Explosionsdarstellung und im zusammengesetzten Zustand;
- Fig.2: in mehreren schematischen Ansichten ein Zellpack des Batteriepacks aus Fig.1;
- Fig.3: in einer Vorderansicht, einer Seitenansicht und einer Schnittansicht schematisch ein Ausführungsbeispiel eines Batteriepacks mit drei Batteriezellen und dreieckigem Gehäuse;
- Fig.4: in einer perspektivischen Ansicht, einer Seitenansicht und einer Schnittansicht schematisch ein Ausführungsbeispiel eines Batteriepacks mit sechs Batteriezellen und sechseckigem Gehäuse; und
- Fig.5a,b: in schematischen Ansichten Ausführungsbeispiele von Batteriepacks mit in mehreren Lagen angeordneten Batteriezellen.

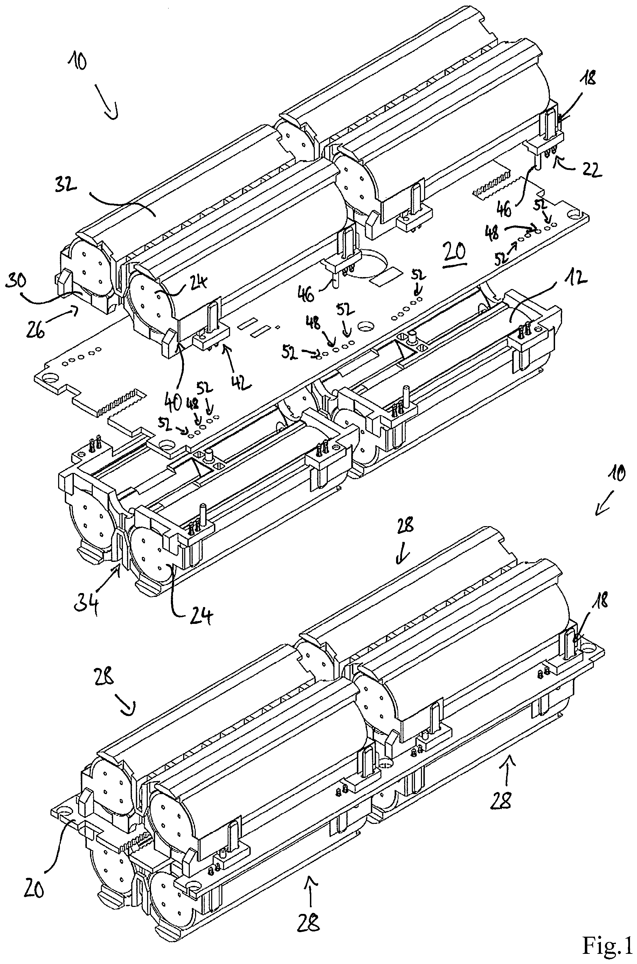

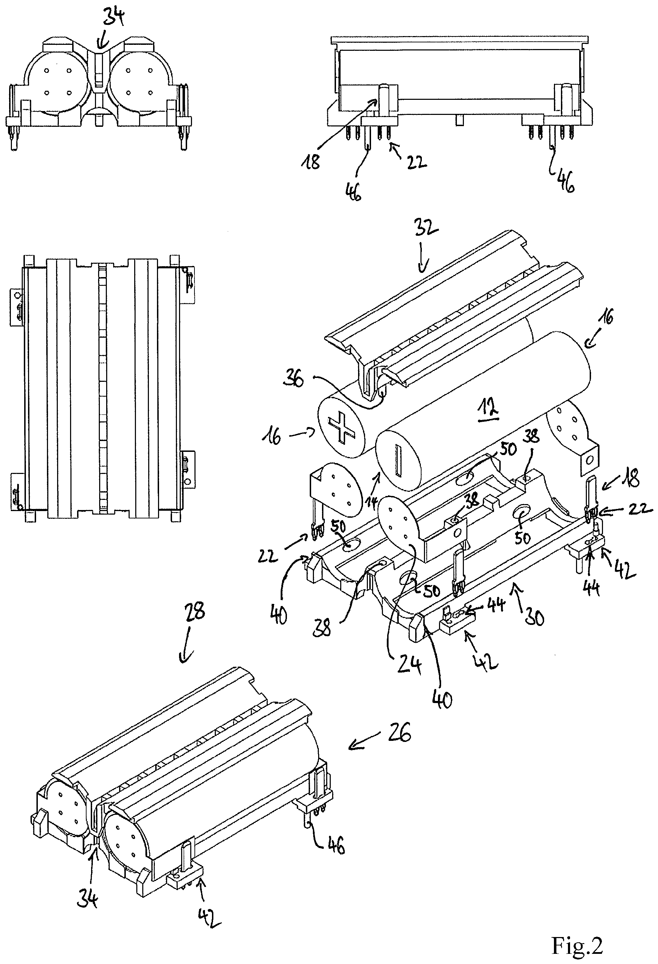

Figur 1 zeigt ein Ausführungsbeispiel eines Batteriepacks, das insgesamt mit dem Bezugszeichen 10 bezeichnet ist. Das Batteriepack 10 weist mindestens eine Batteriezelle 12 auf. Die Batteriezelle 12 ist an ihren Batteriepolen 14, 16 mit Verbindungselementen 18 gekoppelt und elektrisch leitend verbunden (siehe Fig.2).

Die Batteriezelle 12 ist auf einem flächigen Leiterelement 20 positioniert. Die Batteriezelle 12 ist durch einen

Trennvorgang und/oder einen Umformvorgang zwischen Verbindungselementen 18 und Leiterelement 20 elektrisch leitend mit dem Leiterelement 20 verbunden und am oder auf dem Leiterelement 20 fixiert (siehe Fig.1).

Die Verbindungselemente 18 weisen jeweils Kontaktabschnitte 22 auf, mit denen die Verbindungselemente 18 in das Leiterelement 20 einpressbar, einstanzbar, eincrimpbar oder einstanzbar sind. Im vorliegenden Ausführungsbeispiel sind die Kontaktabschnitte 22 als Stecker ausgeführt, die in das Leiterelement 20 eingeklemmt sind.

Die Verbindungselemente 18 sind jeweils mittels eines Kontaktblechs 24 mit der Batteriezelle 12 verbunden, und zwar verschweißt. Die Batteriezelle 12 ist durch einen Zellhalter 26 fixiert. Die Gesamtheit aus Zellhalter 26, mindestens einer Batteriezelle 12, Kontaktblechen 24 und Verbindungselementen 18 bilden einen Zellpack 28 (siehe Fig.2). Der Zellpack 28 kann als solcher einzeln gehandhabt werden.

Der Zellhalter 26 weist ein Unterteil 30 und ein Oberteil 32 auf. Unterteil 30 und Oberteil 32 sind mittels einer Rasthakenverbindung 34 aneinander befestigbar.

Eines der Teile von Oberteil 32 und Unterteil 30 weist mehrere, vorzugsweise drei, Führungsstifte 36 auf und das andere Teil von Oberteil 32 und Unterteil 30 weist mehrere, vorzugsweise drei, Ausnehmungen oder Durchgänge 38 zur Aufnahme der Führungsstifte 36 auf.

Der Zellhalter 26 weist an seinem Unterteil 30 zumindest einen Aufnahmebereich 40 auf, in dem ein Kontaktblech 24 gehalten ist. Vorliegend weist das Unterteil 30 vier Aufnahmebereiche 40 für vier Kontaktbleche 24 auf. Der Aufnahmebereich 40 ist als Aufnahmeschlitz ausgeführt.

Der Zellhalter 26 weist an seinem Unterteil 30 zudem Aufnahmeabschnitte 42 auf, in oder an denen jeweils eines der Verbindungselemente 18 aufgenommen und/oder fixiert ist. Vorliegend sind am Unterteil 30 vier Aufnahmeabschnitte 42 für vier Verbindungselemente 18 ausgebildet. Die Aufnahmeabschnitte 42 sind als Fortsätze mit Durchgängen 44 ausgebildet.

Am Zellhalter 26 und insbesondere am Unterteil 30 des Zellhalters 26 sind zwei abragende Positionierstifte 46 ausgebildet und am Leiterelement 20 sind zwei Ausnehmungen 48 ausgebildet, die mit den Positionierstiften 46 korrespondieren.

Der Zellhalter 26 weist Ausgleichselemente 50 zum Toleranzausgleich der Dicke der Batteriezellen 12 auf. Die Ausgleichselemente 50 sind in Form silikongefüllter Taschen ausgebildet (siehe Fig.2).

Im vorliegenden Ausführungsbeispiel sind die Kontaktabschnitte 22 der Verbindungselemente 18 als Stecker ausgeführt. Diese sind in Verbindungselementaufnahmen 52 eingesteckt, die im vorliegenden Ausführungsbeispiel als Steckerdurchgänge ausgeführt sind.

Das flächige Leiterelement 20 ist als bestückte Leiterplatine ausgeführt.

Das Verfahren zum Herstellen eines Batteriepacks 10 mit mindestens einer Batteriezelle 12 kann wie folgt ablaufen:
Zunächst wird der Zellhalter 26 mit seinem Unterteil 30 und seinem Oberteil 32 bereitgestellt. Die Verbindungselemente 18 und die Kontaktbleche 24 werden in den Aufnahmebereich 40 und die Durchgänge 44 des Aufnahmeabschnitts 42 eingesetzt. Jeweils ein Verbindungselement 18 wird mit dem zugehörigen Kontaktblech 24 verschweißt.

Anschließend werden die Batteriezellen 12 in das Unterteil 30 des Zellhalters 26 unter Beachtung der Einbaurichtung eingelegt und/oder eingeklebt.

Das Oberteil 32 des Zellhalters 26 wird auf das Unterteil 30 des Zellhalters 26 aufgesetzt, wobei die Führungsstifte 36 in den Durchgängen 38 geführt sind. Durch die Rasthakenverbindung 34 wird das Oberteil 32 des Zellhalters 26 am Unterteil 30 des Zellhalters 26 fixiert.

Anschließend werden die Kontaktbleche 24 mit den Batteriepolen 14, 16 der Batteriezelle 12 verschweißt. Damit ist ein Zellpack 28 fertiggestellt.

Im Nachgang hierzu wird das flächige Leiterelement 20 in Form einer bestückten Leiterplatine bereitgestellt und positioniert. Die Batteriezellen 12 und der oder die Zellpacks 28 werden mittels der Positionierstifte 46, die in damit korrespondierende Ausnehmungen 48 eingreifen, relativ zum flächigen Leiterelement 20 positioniert.

Anschließend werden die Batteriezellen 12 und der Zellpack 28 durch eine Verbindungsmethode elektrisch mit dem flächigen Leiterelement 20 in Form einer bestückten Platine elektrisch verbunden. Im vorliegenden Ausführungsbeispiel werden die Verbindungselemente 18 in Form von Steckern in Verbindungselementaufnahmen 52, die als Steckerdurchgänge 52 ausgebildet sind, eingepresst.

Damit sind die Batteriezellen 12 und das Zellpack 28 mechanisch am flächigen Leiterelement 20 in Form einer Leiterplatine fixiert und elektrisch leitend mit der Leiterplatine verbunden.

Sämtliche Zellpacks 28, im vorliegenden Ausführungsbeispiel vier Zellpacks 28 mit jeweils zwei Batteriezellen 12, werden beiderseits des flächigen Leiterelements 20 positioniert und auf die beschriebene Weise elektrisch mit dem Leiterelement 20 verbunden und am Leiterelement 20 fixiert. Die Kontaktierung der Batteriezellen 12 eines Zellpacks 28 untereinander und der Batteriezellen 12 mehrerer Zellpacks 28 erfolgt über das Leiterelement 20. Damit ist ein Batteriepack 10 fertig gestellt.

Das Batteriepack 10 kann zudem ein Gehäuse und elektrische Anschlüsse zur Kontaktierung von Energieverbrauchern und/oder mehreren Batteriepacks untereinander aufweisen (nicht dargestellt).

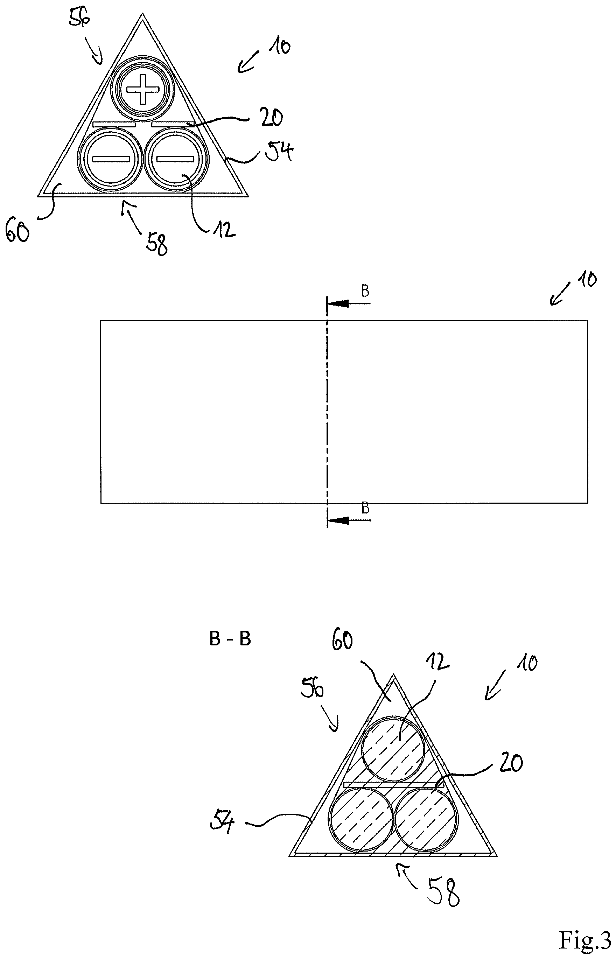

Figur 3 zeigt in mehreren schematischen Ansichten ein Batteriepack 10 mit drei Batteriezellen 12. Das Batteriepack 10 weist ein dreieckiges Gehäuse 54 auf. Die Batteriezellen 12 sind jeweils in einer Lage am flächigen Leiterelement 20 angeordnet. In einer ersten Seite 56 des flächigen Leiterelements 20 ist eine Batteriezelle 12 angeordnet. An einer zweiten Seite 58 des flächigen Leiterelements 20 sind zwei Batteriezellen 12 angeordnet. Die Freiräume 60 zwischen den Batteriezellen 12 und dem Gehäuse 54 können zur Kühlung oder Lüftung des Batteriepacks 10 verwendet werden.

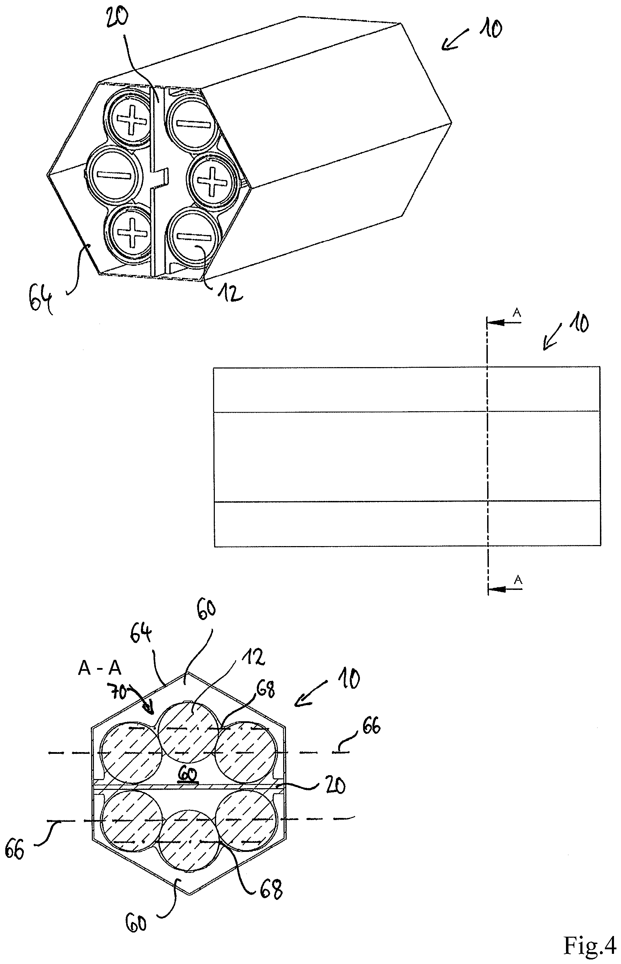

Figur 4 zeigt in mehreren schematischen Ansichten ein Batteriepack 10 mit sechs Batteriezellen 12. Das Batteriepack 10 weist ein sechseckiges Gehäuse 64 auf. Die Batteriezellen 12 sind auf der ersten Seite 56 und der zweiten Seite 58 des flächigen Leiterelements 20 jeweils in einer ersten Lage 66 und einer zweiten Lage 68 angeordnet. Dabei befindet sich die in der zweiten Lage 68 angeordnete Batteriezelle 12 in einem Zwischenraum 70 zwischen den in der ersten Lage 66 angeordneten Batteriezellen 12. Die Freiräume 60 zwischen den Batteriezellen 12 und dem Gehäuse 64 können zur Kühlung oder Lüftung des Batteriepacks 10 verwendet werden.

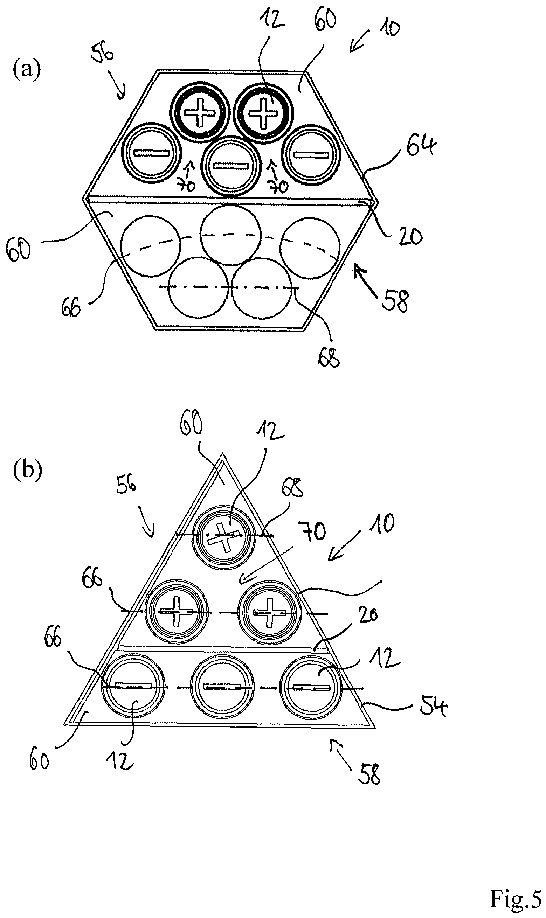

Figur 5(a) zeigt in einer Vorderansicht ein Batteriepack 10 mit zehn Batteriezellen 12. Das Batteriepack 10 weist ein sechseckiges Gehäuse 64 auf. Die Batteriezellen 12 sind auf der ersten Seite 56 und der zweiten Seite 58 des flächigen Leiterelements 20 jeweils in einer ersten Lage 66 und einer zweiten Lage 68 angeordnet. Die erste Lage 66 weist eine gekrümmte Form und die zweite Lage 68 eine ebene Form auf. Die in der zweiten Lage 68 angeordneten Batteriezellen 12 befinden sich in Zwischenräumen 70 zwischen den in der ersten Lage 66 angeordneten Batteriezellen 12. Die Freiräume 60 zwischen den Batteriezellen 12 und dem Gehäuse 64 können zur Kühlung oder Lüftung des Batteriepacks 10 verwendet werden.

Figur 5(b) zeigt in einer Vorderansicht ein Batteriepack 10 mit sechs Batteriezellen 12. Das Batteriepack 10 weist ein dreieckiges Gehäuse 64 auf. Die Batteriezellen 12 sind auf der ersten Seite 56 des flächigen Leiterelements 20 in einer ersten Lage 66 und einer zweiten Lage 68 angeordnet. Die in der zweiten Lage 68 angeordnete Batteriezelle 12 befindet sich in einem Zwischenraum 70 zwischen den in der ersten Lage 66 angeordneten Batteriezellen 12 und ist von diesen beabstandet. Auf der zweiten Seite 58 des flächigen Leiterelements 20 sind die Batteriezellen 12 in einer ersten Lage 66 angeordnet. Die Freiräume 60 zwischen den Batteriezellen 12 und dem Gehäuse 64 können zur Kühlung oder Lüftung des Batteriepacks 10 verwendet werden.

## Patentansprüche

1. Batteriepack (10) mit mindestens einer Batteriezelle (12), wobei die Batteriezelle (12) an ihren Batteriepolen (14, 16) mit Verbindungselementen (18) gekoppelt und elektrisch leitend verbunden ist, **dadurch gekennzeichnet, dass** die Batteriezelle (12) auf einem flächigen Leiterelement (20) positioniert ist, dass die Verbindungselemente (18) jeweils Kontaktabschnitte (22) aufweisen, mit denen die Verbindungselemente (18) in das Leiterelement (20) einpressbar, einstanzbar, eincrimpbar und/oder einklemmbar sind, so dass die Batteriezelle (12) elektrisch leitend mit dem Leiterelement (20) verbunden und auf dem Leiterelement (20) fixiert ist.

2. Batteriepack (10) nach Anspruch 1, **dadurch gekennzeichnet, dass** die Verbindungselemente (18) jeweils mittels eines Kontaktblechs (24) mit der Batteriezelle (12) verbunden sind, insbesondere verschweißt sind, und/oder dass die Batteriezelle (12) durch einen Zellhalter (26) fixiert ist.

3. Batteriepack (10) nach Anspruch 2, **dadurch gekennzeichnet, dass** das Verbindungselement (18), insbesondere zusammen mit dessen Kontaktabschnitt (22), und das Kontaktblech (24) einstückig ausgebildet sind und/oder dass das Verbindungselement (18) sowie das Kontaktblech (24) einstückig mit einem Batteriepol (14, 16) der Batteriezelle (12) ausgebildet sind.

4. Batteriepack (10) nach Anspruch 2 oder 3, **dadurch gekennzeichnet, dass** der Zellhalter (26) ein Unterteil (30) und ein Oberteil (32) aufweist, die mittels einer Klemmverbindung, insbesondere einer Rasthakenverbindung (34), aneinander befestigbar sind.

5. Batteriepack (10) nach Anspruch 4, **dadurch gekennzeichnet, dass** eines der Teile von Oberteil (32) und Unterteil (30) Führungsstifte (36) aufweist und das andere Teil von Oberteil (32) und Unterteil (30) Ausnehmungen oder Durchgänge (38) zur Aufnahme der Führungsstifte (36) aufweist.

6. Batteriepack (10) nach einem der Ansprüche 2 bis 5, **dadurch gekennzeichnet, dass** der Zellhalter (26) einen Aufnahmebereich (40) aufweist, in dem ein Kontaktblech (24) gehalten ist und/oder dass der Zellhalter (26) Aufnahmeabschnitte (42) aufweist, in oder an denen jeweils eines der Verbindungselemente (18) aufgenommen und/oder fixiert ist.

7. Batteriepack (10) nach einem der Ansprüche 2 bis 6, **dadurch gekennzeichnet, dass** am Zellhalter (26) abragende Positionierstifte (46) ausgebildet sind und dass am Leiterelement (20) Ausnehmungen (48) ausgebildet sind, die mit den Positionierstiften (46) korrespondieren.

8. Batteriepack (10) nach einem der Ansprüche 2 bis 7, **dadurch gekennzeichnet, dass** der Zellhalter (26) Ausgleichselemente (50), insbesondere silikongefüllte Taschen, zum Toleranzausgleich der Dicke der Batteriezellen (12) aufweist.

9. Batteriepack (10) nach einem der vorhergehenden Ansprüche, **dadurch gekennzeichnet, dass** das flächige Leiterelement (20) als bestückte Leiterplatine ausgebildet ist und/oder dass auf zwei gegenüberliegenden Seiten (56, 58) des flächigen Leiterelements (20) jeweils mindestens eine Batteriezelle (12) positioniert ist, insbesondere in Form von durch Zellhalter (26) gehaltenen Zellpacks (28) .

10. Batteriepack (10) nach einem der vorhergehenden Ansprüche, **dadurch gekennzeichnet, dass** auf mindestens einer Seite (56, 58) des flächigen Leiterelements (20) Batteriezellen (12) in mehreren Lagen (66, 68) angeordnet sind und/oder dass ein das Batteriepack (10) aufnehmende Gehäuse (54, 64) vorgesehen ist, das einen runden oder n-eckigen Querschnitt mit n > 3 aufweist.

11. Verfahren zum Herstellen eines Batteriepacks (10) mit mindestens einer Batteriezelle (12), wobei die Batteriezelle (12) an ihren Batteriepolen (14, 16) mit Verbindungselementen (18) gekoppelt und elektrisch leitend verbunden wird, **dadurch gekennzeichnet, dass** die Batteriezelle (12) auf einem flächigen Leiterelement (20) positioniert wird, dass die Verbindungselemente (18) jeweils Kontaktabschnitte (22) aufweisen, mit denen die Verbindungselemente (18) in das Leiterelement (20) eingepresst, eingestanzt, eingecrimpt und/oder eingeklemmt werden, so dass die Batteriezelle (12) elektrisch leitend mit dem Leiterelement (20) verbunden und auf dem Leiterelement (20) fixiert wird.

12. Verfahren nach Anspruch 11, **dadurch gekennzeichnet, dass** die Verbindungselemente (18) mittels eines Kontaktblechs (24) mit der Batteriezelle (12) gekoppelt werden, insbesondere verschweißt werden, und/oder dass die Batteriezelle (12) durch einen Zellhalter (26) fixiert wird.

13. Verfahren nach Anspruch 12, **dadurch gekennzeichnet, dass** der Zellhalter (26) einen Aufnahmebereich (40) aufweist, in den das Kontaktblech (24) eingesetzt wird und/oder dass der Zellhalter (26) Aufnahmeabschnitte (42) aufweist, in oder an denen jeweils eines der Verbindungselemente (18) eingesetzt wird.

14. Verfahren nach Anspruch 12 oder 13, **dadurch gekennzeichnet, dass** am Zellhalter (26) abragende Positionierstifte (46) ausgebildet sind, die zur Positionierung der Batteriezelle (12) auf dem Leiterelement (20) in im Leiterelement (20) ausgebildete Ausnehmungen (48) geführt werden.

15. Verfahren nach einem der Ansprüche 11 bis 14, **dadurch gekennzeichnet, dass** Batteriezellen (12) auf zwei gegenüberliegenden Seiten des flächigen Leiterelements (20) positioniert werden, insbesondere in Form von durch Zellhalter (26) gehaltenen Zellpacks (28).

## Claims

1. A battery pack (10) having at least one battery cell (12), wherein the battery cell (12) is coupled and electrically conductively connected to connecting elements (18) at its battery poles (14, 16), **characterized in that** the battery cell (12) is positioned on a flat conductor element (20) and **in that** the connecting elements (18) each comprise contact portions (22) by means of which the connecting elements (18) can be pressed, punched, crimped and/or clamped into the conductor element (20) such that the battery cell (12) is electrically conductively connected to the conductor element (20) and is fixed on the conductor element (20).

2. The battery pack (10) according to claim 1, **characterized in that** the connecting elements (18) are each connected, in particular welded, to the battery cell (12) by means of a contact plate (24), and/or **in that** the battery cell (12) is fixed by a cell holder (26).

3. The battery pack (10) according to claim 2, **characterized in that** the connecting element (18), in particular together with the contact portion (22) thereof, and the contact plate (24) are integrally formed and/or **in that** the connecting element (18) and the contact plate (24) are integrally formed with a battery pole (14, 16) of the battery cell (12).

4. The battery pack (10) according to claim 2 or claim 3, **characterized in that** the cell holder (26) comprises a lower part (30) and an upper part (32), which can be fastened to one another by means of a clamped connection, in particular a snap-in hook connection (34).

5. The battery pack (10) according to claim 4, **characterized in that** one of the parts constituted by the upper part (32) and the lower part (30) comprises guide pins (36) and the other part constituted by the upper part (32) and the lower part (30) comprises recesses or passages (38) for receiving the guide pins (36).

6. The battery pack (10) according to any of claims 2 to 5, **characterized in that** the cell holder (26) comprises a receiving region (40) in which a contact plate (24) is retained and/or **in that** the cell holder (26) comprises receiving portions (42) in or on each of which one of the connecting elements (18) can be received and/or fixed.

7. The battery pack (10) according to any of claims 2 to 6, **characterized in that** protruding positioning pins (46) are formed on the cell holder (26) and **in that** recesses (48) are formed on the conductor element (20) that correspond to the positioning pins (46).

8. The battery pack (10) according to any of claims 2 to 7, **characterized in that** the cell holder (26) comprises compensating elements (50), in particular silicone-filled pockets, for tolerance compensation for the thickness of the battery cells (12).

9. The battery pack (10) according to any of the preceding claims, **characterized in that** the flat conductor element (20) is formed as an equipped printed circuit board and/or **in that** at least one battery cell (12) is positioned on each of the two opposite sides (56, 58) of the flat conductor element (20), in particular in the form of cell packs (28) held by the cell holder (26).

10. The battery pack (10) according to any of the preceding claims, **characterized in that** battery cells (12) are arranged in a plurality of layers (66, 68) on at least one side (56, 58) of the flat conductor element (20) and/or **in that** a housing (54, 64) that receives the battery pack (10) is provided that has a round or n-polygonal cross section where n > 3.

11. A method for producing a battery pack (10) having at least one battery cell (12), wherein the battery cell (12) is being coupled and electrically conductively connected to connecting elements (18) at its battery poles (14, 16), **characterized in that** the battery cell (12) is being positioned on a flat conductor element (20) and **in that** the connecting elements (18) each comprise contact portions (22) by means of which the connecting elements (18) are being pressed, punched, crimped and/or clamped into the conductor element (20) such that the battery cell (12) is being electrically conductively connected to the conductor element (20) and is being fixed to the conductor element (20).

12. The method according to claim 11, **characterized in that** the connecting elements (18) are being coupled, in particular welded, to the battery cell (12) by means of a contact plate (24), and/or **in that** the battery cell (12) is being fixed by a cell holder (26).

13. The method according to claim 12, **characterized in that** the cell holder (26) comprises a receiving region (40) into which a contact plate (24) is being inserted and/or in that the cell holder (26) comprises receiving portions (42) into or onto each of which one of the connecting elements (18) is being inserted.

14. The method according to claim 12 or claim 13, **characterized in that** protruding positioning pins (46) are formed on the cell holder (26) that are being guided in recesses (48) formed in the conductor element (20) in order to position the battery cell (12) on the conductor element (20).

15. The method according to any of claims 11 to 14, **characterized in that** battery cells (12) are being positioned on two opposite sides of the flat conductor element (20), in particular in the form of cell packs (28) held by the cell holder (26).

## Revendications

1. Bloc-batterie (10) avec au moins un élément de batterie (12), dans lequel l'élément de batterie (12) est couplé et relié de manière électro-conductrice, au niveau de ses pôles de batterie (14, 16), à des éléments de liaison (18), **caractérisé en ce que** l'élément de batterie (12) est positionné sur un élément conducteur (20) plat, que les éléments de liaison (18) présentent respectivement des parties de contact (22), avec lesquelles les éléments de liaison (18) peuvent être enfoncés, estampés, sertis et/ou coincés dans l'élément conducteur (20) plat, de sorte que l'élément de batterie (12) est relié de manière électro-conductrice à l'élément conducteur (20) et fixé sur l'élément conducteur (20).

2. Bloc-batterie (10) selon la revendication 1, **caractérisé en ce que** les éléments de liaison (18) sont reliés, en particulier soudés, à l'élément de batterie (12) respectivement au moyen d'une tôle de contact (24), et/ou que l'élément de batterie (12) est fixé par un porte-élément (26).

3. Bloc-batterie (10) selon la revendication 2, **caractérisé en ce que** l'élément de liaison (18), en particulier conjointement avec sa partie de contact (22), et la tôle de contact (24) sont réalisés d'une seule pièce et/ou que l'élément de liaison (18) ainsi que la tôle de contact (24) sont réalisés d'une seule pièce avec un pôle de batterie (14, 16) de l'élément de batterie (12).

4. Bloc-batterie (10) selon la revendication 2 ou 3, **caractérisé en ce que** le porte-élément (26) présente une partie inférieure (30) et une partie supérieure (32), qui peuvent être fixées l'une sur l'autre au moyen d'une liaison à serrage, en particulier d'une liaison à crochet d'encliquetage (34).

5. Bloc-batterie (10) selon la revendication 4, **caractérisé en ce qu'**une des parties de la partie supérieure (32) et partie inférieure (30) présente des tiges de guidage (36) et l'autre partie de la partie supérieure (32) et partie inférieure (30) présente des évidements ou passages (38) destinés à loger les tiges de guidage (36).

6. Bloc-batterie (10) selon l'une quelconque des revendications 2 à 5, **caractérisé en ce que** le porte-élément (26) présente une zone de logement (40), dans laquelle une zone de contact (24) est retenue et/ou que le porte-élément (26) présente des sections de logement (42), dans ou sur lesquelles respectivement un des éléments de liaison (18) est logé et/ou fixé.

7. Bloc-batterie (10) selon l'une quelconque des revendications 2 à 6, **caractérisé en ce que** des tiges de positionnement (46) saillantes sont réalisées sur le porte-élément (26) et que des évidements (48), qui correspondent aux tiges de positionnement (46), sont réalisés sur l'élément conducteur (20).

8. Bloc-batterie (10) selon l'une quelconque des revendications 2 à 7, **caractérisé en ce que** le porte-élément (26) présente des éléments de compensation (50), en particulier des poches remplies de silicone, pour la compensation des tolérances de l'épaisseur des éléments de batterie (12).

9. Bloc-batterie (10) selon l'une quelconque des revendications précédentes, **caractérisé en ce que** l'élément conducteur (20) plat est réalisé sous la forme d'une carte de circuits imprimés équipée et/ou que respectivement au moins un élément de batterie (12), en particulier sous forme de blocs d'éléments (28) retenus par des porte-élément (26), est positionné sur deux faces (56, 58) opposées de l'élément conducteur (20) plat.

10. Bloc-batterie (10) selon l'une quelconque des revendications précédentes, **caractérisé en ce que** des éléments de batterie (12) sont disposés en plusieurs couches (66, 68) sur au moins une face (56, 58) de l'élément conducteur (20) plat et/ou qu'un boîtier (54, 64) logeant le bloc-batterie (10) est prévu, qui présente une section transversale ronde ou n-angulaire avec n > 3.

11. Procédé pour fabriquer un bloc-batterie (10) avec au moins un élément de batterie (12), dans lequel l'élément de batterie (12), au niveau de ses pôles de batterie (14, 16), est couplé et relié de manière électro-conductrice à des éléments de liaison (18), **caractérisé en ce que** l'élément de batterie (12) est positionné sur un élément conducteur (20) plat, que les éléments de liaison (18) présentent respectivement des parties de contact (22), avec lesquelles les éléments de liaison (18) peuvent être enfoncés, estampés, sertis et/ou coincés dans l'élément conducteur (20) plat, de sorte que l'élément de batterie (12) est relié de manière électro-conductrice à l'élément conducteur (20) et fixé sur l'élément conducteur (20).

12. Procédé selon la revendication 11, **caractérisé en ce que** les éléments de liaison (18) sont accouplés, en particulier soudés, à l'élément de batterie (12) au moyen d'une tôle de contact (24), et/ou que l'élément de batterie (12) est fixé par un porte-élément (26).

13. Procédé selon la revendication 12, **caractérisé en ce que** le porte-élément (26) présente une zone de logement (40), dans laquelle la zone de contact (24) est insérée et/ou que le porte-élément (26) présente des parties de logement (42), dans ou sur lesquelles respectivement un des éléments de liaison (18) est inséré.

14. Procédé selon la revendication 12 ou 13, **caractérisé en ce que** des tiges de positionnement (46) saillantes, qui, pour le positionnement de l'élément de batterie (12) sur l'élément conducteur (20), sont guidées dans des évidements (48) réalisés dans l'élément conducteur (20), sont réalisées sur le porte-élément (26) .

15. Procédé selon l'une quelconque des revendications 11 à 14, **caractérisé en ce que** des éléments de batterie (12) sont positionnés sur deux faces opposées de l'élément conducteur (20) plat, en particulier sous forme de blocs d'éléments (28) retenus par des porte-éléments (26).
